# EUROPÄISCHE PATENTSCHRIFT

(11) **EP 0 877 049 B1**
(45) Veröffentlichungstag und Bekanntmachung des Hinweises auf die Patenterteilung: **05.02.2003**
(21) Anmeldenummer: 98107991.6
(22) Anmeldetag: 30.04.1998
(51) Int. Cl.: C08K 13/04, C08K 3/04, C08K 7/06

(54) **Elektrostatisch beschichtbarer Polyamidwerkstoff**
Electrostatically coatable polyamide material
Matériau en polyamide electrostatiquement revêtable

(30) Priorität: 06.05.1997 DE 19719150
(43) Veröffentlichungstag der Anmeldung: 11.11.1998
(73) Patentinhaber: F.A. Rueb Holding GmbH, 79677 Schönau (DE)
(72) Erfinder: Baqué, Thomas, Dr., 79677 Schoenau/Schwarzwald (DE)
(74) Vertreter: Grünecker, Kinkeldey, Stockmair & Schwanhäusser Anwaltssozietät

(56) Entgegenhaltungen:
- EP-A- 0 231 663
- EP-A- 0 407 832
- EP-A- 0 578 245
- EP-A- 0 580 387
- FR-A- 2 596 567
- GB-A- 2 268 182
- US-A- 4 339 374
- DATABASE WPI Section Ch, Week 8421 Derwent Publications Ltd., London, GB; Class A18, AN 84-129455 XP002072512 & JP 58 176 224 A (SHOWA DENKO KK)

## Beschreibung

Die Erfindung betrifft einen mit einem Pulverlack elektrostatisch beschichtbaren Polyamidwerkstoff.

Polyamidwerkstoffe kommen dort zur Anwendung, wo das Grundmaterial der Formstücke aus einem Werkstoff mit elektrischer Leitfähigkeit, hoher Wärmekapazität und hoher Wärmeformstabilität bestehen muß, der bei Temperaturen bis 240°C verwendet wird.

Polyamidfertigteile lassen sich nachträglich mit Spezialfarbstoffen im wäßrigen Bad bei ca. 70 bis 95°C auffärben. Für Oberflächeneffekte braucht man Lacke mit artverwandtem Grundstoff und Speziallösemittel. Spritzgußteile aus Polyamid können auch pulverlackiert werden. Diese Technik gewinnt im industriellen Bereich immer mehr an Bedeutung. Die Gründe hierfür liegen unter anderem in der Lösungsmittelfreiheit der Lacksysteme und in der einfachen Wiederaufbereitung der Pulverlacke.

Kombinationen von Metall- und Kunststoffteilen müssen jedoch getrennt in separaten Verfahren lackiert werden, wobei auch verschiedene Lacksysteme verwendet werden.

Die JP-A-58-176224 offenbart elektrostatisch beschichtete Polyamid-Zusammensetzungen, die elektrisch leitenden Ruß enthalten.

Die EP-A-667625 offenbart elektrostatisch beschichtete Polyamid-Zusammensetzungen, die metallische Pulver und Kohlefaser enthalten.

Diese im Stand der Technik bekannten Werkstoffe weisen einige Nachteile auf.

Die aus den oben beschriebenen Zusammensetzungen erhaltenen Werkstoffe besitzen ein hohes spezifisches Gewicht, was aufgrund ökonomischer, ökologischer und prozeßtechnischer Überlegungen in vielen Fällen unerwünscht ist.

Durch die Sedimentationsneigung des Metallpulvers im Spritzgußverfahren können Schwierigkeiten bei der Verarbeitung eines mit Metallpulver gefüllten Materials auftreten. Mit Ruß gefüllte Polyamidwerkstoffe zeigen häufig eine nur ungenügende Pulverlackanhaftung an den Werkstoff. Aus den oben genannten Zusammensetzungen gefertigte Formteile weisen zudem eine nicht optimale Dimensionsstabilität auf, d.h. sie zeigen eine Verzugsneigung.

Die GB-A-22 68 182 offenbart eine elektrostatisch Pulverlackierbare Polyamidzusammensetzung, umfassend Polyamid und einen mineralischen Füllstoff.

Der vorliegenden Erfindung liegt die Aufgabe zugrunde, einen mit einem Pulverlack elektrostatisch beschichtbaren Polyamidwerkstoff anzugeben, der die oben genannten Mängel überwindet.

Diese Aufgabe wird erfindungsgemäß durch einen Polyamidwerkstoff nach Anspruch 1 gelöst. Bevorzugte Ausführungsformen sind in den Unteransprüchen angegeben. Weiterhin stellt die vorliegende Erfindung ein Formteil nach Anspruch 5 zur Verfügung.

Überraschenderweise wurde gefunden, daß der Zusatz eines Keramischen Füllstoffs in Kugelform in einer Menge von 5 bis 50 Gew.-%, bezogen auf das Gesamtgewicht des Gemisches, zu Polyamidwerkstoffen mit deutlich verbesserten Eigenschaften führt.

Der erfindungsgemäße Werkstoff besitzt eine wesentliche geringere Dichte (bis zu Faktor 2,5), eine leichte Verarbeitung im Spritzgußsystem, eine verbesserte Pulverlackanhaftung an den Werkstoff, eine geringere Verzugsneigung der gefertigten Formteile und hohe Zeitstandfestigkeit bei hohen Temperaturen bei gleichzeitiger Beibehaltung der gewünschten mechanischen Eigenschaften, wie Zug-, Biege- und Druckfestigkeit, im Gegensatz zu mit Ruß oder mit Metallpulver/Kohlefaser-Gemischen gefüllten Werkstoffen. Der Zusatz des kugelförmigen Keramischen Füllstoffs sorgt für eine gleichmäßige Ladungsverteilung im Werkstoff, was zu verbesserter, gleichmäßiger Lackanhaftung führt.

Darüberhinaus sorgt der kugelförmige Füllstoff für eine gesteigerte Dimensionsstabilität, auch bei hohen Temperaturen bzw. großen Temperaturschwankungen. So wird die Eignung des Polyamidwerkstoffs zur Kombination mit Metallteilen verbessert. Die bei den bekannten Polyamidwerkstoffen häufig zu beobachtende Kantenflucht tritt ebenfalls bei den erfindungsgemäßen Polyamidwerkstoffen nicht auf.

Das Polyamid des erfindungsgemäßen Werkstoffs kann irgendein Polyamid sein. Als Homopolymere sind Polyamid 6 oder Polyamid 66 bevorzugt. Weiterhin sind Copolymere, die aus üblichen Monomeren copolymerisiert werden können, bevorzugt. Illustratative Beispiele sind Copolyamide aus 6-Aminocapronsäure und 1,5 Hexandiammonium-adipat, ε-Caprolactam und 11-Aminoundecansäure, oder 1,6-Hexandiamin, Adipinsäure und ε-Caprolactam. Der Polyamidanteil des Werkstoffs beträgt 25 bis 90 Gew.-%, bevorzugt 35 bis 80 Gew.-%, insbesondere bevorzugt 55 bis 75 Gew.-%, bezogen auf das Gesamtgewicht des Gemisches.

Der Füllstoff wird in einer Menge von 5 bis 50 Gew.-%, bevorzugt von 10 bis 40 Gew.-%, insbesondere bevorzugt von 15 bis 30 Gew.-%, bezogen auf das Gesamtgewicht des Werkstoffs eingemischt. Der Füllstoff ist ein Keramikmaterial, welches eine Kugelform besitzt. Diese Füllstoffe haben üblicherweise einen mittleren Teilchendurchmesser von 0,01 bis 100 µm, bevorzugt von 0,1 bis 50 µm und insbesondere bevorzugt von 1 bis 20 µm. Zeeosphere™-Keramikkugeln der Typen 200, 400, 600, 800 und 850 verwendet. Diese Keramikkugeln besitzen eine mittlere Teilchengröße von 1,3-17 µm, bestimmt mit einem Coulter-Zähler.

Bevorzugt sind Keramikkugeln aus Silicium und Aluminiumoxiden sowie deren Mischungen. Keramikkugeln aus diesen Materialien, die einen inneren Hohlraum und dicke Wände aufweisen, sind insbesondere bevorzugt. Die Keramikkugeln sollten eine Härte von etwa 7 auf der Mohs-Skala aufweisen. Die Keramikmaterialien sollten einen Erweichungspunkt von über 1000°C besitzen.

Der erfindungsgemäße Werkstoff enthält elektrisch leitenden Ruß und/oder Kohlefaser in einer Menge von 0,1 bis 25 Gew.-%. Die beiden Komponenten können einzeln als auch in Mischung eingesetzt werden. Die Menge an Ruß und/oder Kohlefaser ist bevorzugt 4 bis 15 Gew.-%, insbesondere bevorzugt 6 bis 10 Gew.-%, bezogen auf das Gesamtgewicht des Werkstoffs. Liegen Ruß und Kohlefaser in einer Mischung vor, so kann das Mischungsverhältnis dieser beiden Komponenten beliebig gewählt werden. Bevorzugt ist ein Mischungsverhältnis im Bereich von 1:2 bis 2:1.

Die erfindungsgemäße Zusammensetzung kann weitere übliche Zusätze, wie Gleitmittel und/oder Stabilisatoren, enthalten. Diese beiden Komponenten können jeweils in einer Menge von 0,5 bis 5 Gew.-%, bezogen auf das Gesamtgewicht des Werkstoffs, vorhanden sein. Bevorzugt werden 2 Gew.-% Gleitmittel sowie 1 Gew.-% Stabilisatorkomponente eingesetzt. Die Gleitmittel und Stabilisatoren können die üblicherweise verwendeten, bekannten Gleitmittel und Stabilisatoren für Polyamidwerkstoffe sein. Bevorzugt sind Calciumstearat, Natriumphosphit, Trisnonylphenylphosphit, und Octadecyl[3-(3,5-di-tert.-butyl-4-hydroxyphenyl)-propionat].

Erfindungsgemäße Werkstoffe können im Bereich konstruktiver Elemente, wie Verbindungsteile (Eckverbinder, Profilverbinder), sowie als Verkleidungsteile eingesetzt werden. Der erfindungsgemäße Werkstoff kann nach dem Verfahren nach Anspruch 6 hergestellt werden.

Die folgenden Beispiele erläutern die Erfindung. Die Angaben sind Gew.-%, soweit nicht anders angegeben.

Die Polyamid-Werkstoffe werden durch mechanisches Mischen mittels eines Taumeloder Pflugscharmischers, Aufschmelzen dieses Gemisches in einem Doppelschneckenextruder und anschließender Austragung eines Granulats hergestellt.

### Beispiel 1:

| | |
|---|---|
| Polyamid 66 | 75,00% |
| Keramikkugeln (Zeeospheres™) | 15,00% |
| Leitruß | 7,00% |

| Stabilisatoren: | |
|---|---|
| Natriumphosphit | 0,25% |
| Octadecyl[3-(3,5-di-tert.-butyl-4-hydroxyphenyl)-propionat] | 0,75% |

| Gleitmittel: | |
|---|---|
| Calciumstearat | 2,00% |

### Beispiel 2:

| | |
|---|---|
| Polyamid 6 | 59,00% |
| Keramikkugeln (Zeeospheres™) | 30,00% |
| Kohlefaser | 8,00% |

| Stabilisatoren: | |
|---|---|
| Trisnonylphenylphosphit | 0,25% |
| Octadecyl[3-(3,5-di-tert.-butyl-4-hydroxyphenyl)-propionat] | 0,75% |

| Gleitmittel: | |
|---|---|
| Calciumstearat | 2,00% |

### Beispiel 3:

| | |
|---|---|
| Polyamid 66 | 75,00% |
| Keramikkugeln (Zeeospheres™) | 15,00% |
| Kohlefaser | 4,00% |
| Ruß | 3,00% |

| Stabilisatoren: | |
|---|---|
| Natriumphosphit | 0,25% |
| Octadecyl[3-(3,5-di-tert.-butyl-4-hydroxyphenyl)-propionat] | 0,75% |

| Gleitmittel: | |
|---|---|
| Calciumstearat | 2,00% |

Die Granulate wurden durch einen Spritzgußprozeß zu dem gewünschten Formstück umgeformt. Bei diesem Prozeß wird das Granulat über seinen Schmelzpunkt erhitzt und die resultierende Schmelze mit hohem Druck und hoher Geschwindigkeit in eine der Fertigteilkontur entsprechend geteilten Negativform gespritzt. Die Schmelze wird abgekühlt und das Fertigteil aus der Form genommen. Die erfindungsgemäßen Polyamidwerkstoffe zeigen eine bessere Pulverlackanhaftung geringere Verzugsneigung der gefertigten Formteile, leichtere Verarbeitung im Spritzgußprozeß und eine wesentlich geringere Dichte, als die im Stand der Technik beschriebenen Polyamidwerkstoffe.

Vergleichsversuche mit rußgefüllten Polyamid-Werkstoffen zeigen deutlich schlechtere Lackierqualität, sowie eine größere Problematik der Kantenflucht und Dimensionsstabilität.

Das so entstandene Polyamidteil kann mit einem Metallteil durch eine mechanische Steckverbindung kombiniert werden. Diese ist so ausgelegt, daß eine formschlüssige Verbindung stattfindet. Das Teil kann anschließend durch ein konventionelles Verfahren elektrostatisch mit einem Pulverlack beschichtet werden.

## Patentansprüche

1. Polyamidwerkstoff aus einem Gemisch, enthaltend 25-90 Gew.-% Polyamid, 5-50 Gew.-% eines keramischen Füllstoffs und 0,1-25 Gew.-% Ruß und/oder Kohlefaser, **dadurch gekennzeichnet, dass** der keramische Füllstoff in Kugelform vorliegt.

2. Polyamidwerkstoff nach Anspruch 1, **dadurch gekennzeichnet, dass** das Polyamid 6 oder Polyamid 66 ist.

3. Polyamidwerkstoff nach Anspruch 1, **dadurch gekennzeichnet, dass** das Polyamid ein Copolyamid ist.

4. Polyamidwerkstoff nach Anspruch 1 oder 2, **dadurch gekennzeichnet, dass** das Gemisch außerdem 0,5-5 Gew.-% eines Gleitmittels und/oder 0,5-5 Gew.-% eines Stabilisators enthält.

5. Formteil aus einem Polyamidwerkstoff nach einem der Ansprüche 1 bis 4, wobei das Formteil elektrostatisch mit einem Pulverlack beschichtet ist.

6. Verfahren zur Herstellung eines Polyamidwerkstoffs nach einem der Ansprüche 1 bis 4, **dadurch gekennzeichnet, dass** 25-90 Gew.-% Polyamid, 5-50 Gew.% eines keramischen Füllstoffs und 0,1-25 Gew.-% Ruß und/oder Kohlefaser vermischt werden, das Gemisch in einem Extruder aufgeschmolzen wird und ein Granulat ausgetragen wird, wobei der keramische Füllstoff in Kugelform vorliegt.

7. Verwendung des Polyamidwerkstoffs nach einem der Ansprüche 1 bis 4 zur Herstellung eines Formteils.

## Claims

1. A polyamide material made from a mixture containing 25-90 wt.% of polyamide, 5-50 wt.% of a ceramic filler and 0.1-25 wt.% of carbon black and/or carbon fibres, **characterised in that** the ceramic filler is present as spheres.

2. A polyamide material according to Claim 1, **characterised in that** the polyamide is polyamide 6 or polyamide 66.

3. A polyamide material according to Claim 1, **characterised in that** the polyamide is a copolyamide.

4. A polyamide material according to Claim 1 or 2, **characterised in that** the mixture also contains 0.5-5 wt.% of a lubricant and/or 0.5-5 wt.% of a stabiliser.

5. A moulded part made from a polyamide material according to one of Claims 1 to 4, wherein the moulded item is electrostatically coated with a powder coating.

6. A process for preparing a polyamide material according to one of Claims 1 to 4, **characterised in that** 25-90 wt.% of polyamide, 5-50 wt.% of a ceramic filler and 0.1-25 wt.% of carbon black and/or carbon fibres are blended, the mixture is melted in an extruder and a granular material is discharged, wherein the ceramic filler is present as spheres.

7. Use of the polyamide material according to one of Claims 1 to 4 to produce a moulded part.

## Revendications

1. Matériau en polyamide constitué d'un mélange contenant 25-90% en poids de polyamide, 5-50% en poids d'une charge en céramique et 0,1-25% en poids de suie et/ou de fibres de carbone, **caractérisé en ce que** la charge en céramique se présente sous la forme de sphères.

2. Matériau en polyamide selon la revendication 1, **caractérisé en ce que** le polyamide est un polyamide 6 ou un polyamide 66.

3. Matériau en polyamide selon la revendication 1, **caractérisé en ce que** le polyamide est un copolyamide.

4. Matériau en polyamide selon la revendication 1 ou 2, **caractérisé en ce que** le mélange contient, en outre, 0,5-5% en poids d'un lubrifiant et/ou 0,5-5% en poids d'un stabilisant.

5. Article moulé constitué d'un matériau en polyamide selon l'une quelconque des revendications 1 à 4, où l'article moulé est revêtu de manière électrostatique, par une peinture en poudre.

6. Procédé de fabrication d'un matériau en polyamide selon l'une quelconque des revendications 1 à 4, **caractérisé en ce que** l'on mélange 25-90% en poids de polyamide, 5-50% en poids d'une charge en céramique et 0,1-25% en poids de suie et/ou de fibres de carbone, le mélange est fondu dans une extrudeuse et converti en granulés, où la charge en céramique se présente sous la forme de sphères.

7. Utilisation du matériau en polyamide selon l'une quelconque des revendications 1 à 4, pour la fabrication d'un article moulé.
